# EUROPEAN PATENT SPECIFICATION

(11) **EP 1 781 390 B1**
(45) Date of publication and mention of the grant of the patent: **05.03.2008**
(21) Application number: 05775302.2
(22) Date of filing: 26.08.2005
(51) Int. Cl.: B01D 3/06, C02F 1/06

(54) **MSF DISTILLATE DRIVEN DESALINATION PROCESS AND APPARATUS**
MSF-DESTILLATGETRIEBENES ENTSALZUNGSVERFAHREN UND VORRICHTUNG DAFÜR
PROCEDE DE DESSALINISATION ENTRAINE PAR DISTILLAT MSF ET APPAREIL

(30) Priority: 27.08.2004 GB 0419117
(43) Date of publication of application: 09.05.2007
(73) Proprietor: O.H.D.L. Optimised Hybrid Desalination Limited, 71 Kingsway London WC2B 6ST (GB)
(72) Inventor: AWERBUCH, Leon, Winchester, MA 01890 (US); SOMMARIVA, Corrado, Abu Dhabi (AE)
(74) Representative: Hillier, Peter
(86) International application number: PCT/GB2005/003329
(87) International publication number: WO 2006/021796

(56) References cited:
- DE-A1- 3 938 012
- US-A- 3 489 654
- US-B1- 6 508 936
- LUDWIG H: "Hybrid systems in seawater desalination-practical design aspects, present status and development perspectives" DESALINATION, ELSEVIER, AMSTERDAM, NL, vol. 164, no. 1, 25 March 2004 (2004-03-25), pages 1-18, XP004513008 ISSN: 0011-9164

## Description

### Technical Field

The invention relates to improvements in processes involving multiple stage flash distillation (MSF) generally and in particular the MSF distillation of seawater i.e. desalination to produce potable water, and relates advantageously to processes including MSF distillation of the kind in which a high top brine temperature is achievable (of the order of 120°C or more).

### Description of Related Art

The known conventional processes for the desalination of salt water to produce potable water include, for example, multistage flash distillation (MSF), multiple effect distillation (MED), reverse osmosis (RO) and vapour compression (VC) distillation. Each of these processes is a well established technology having its own unique characteristics and limitations. However each technology has an independent energy input stream. So far, no studies have been made and no process configurations have been studied or proposed relating to the interaction between MSF and MED or MSF and RO energy process streams taking advantage of the different operating temperature regimes to maximize overall production for a given energy input.

The seawater distillate flow condensed in an MSF tube bundle is forced partly to re-flash when it is transferred to a subsequent stage in an evaporator operating at a lower pressure. The vapour generated by the distillate flashing is mixed with the vapour generated by the brine flashing and thus uses part of the installed heat transfer surface that part being therefore unavailable for the condensation of the flashing brine.

With increasing stage number, the flow rate of distillate collected in the distillate trough increases, and so does the amount of distillate re-flashing. This phenomenon decreases the efficiency of the stage heat transfer mechanism by reducing the effective amount of distillate generated by flashing brine, i.e. the ratio of reflashing of distillate to flashing of brine increases.

It should be noted furthermore that the known arrangement of distillate trough collecting and transferring the distillate from the high to the low temperature stage of the MSF becomes increasingly cumbersome and takes space away from demisters and flashing brine release areas.

The 'heat reject' section of a typical MSF plant uses external seawater cooling to maintain low temperature in the bottom temperature stages.

In this heat reject section the installed heat transfer surface is used both to produce new distillate by condensation of flashing brine and to condense the distillate flashed. Therefore the efficiency of this section of the plant is lower than the heat recovery and typically over 18% of the heat transfer area is used to condense re-flashed distillate.

Multistage flash distillers are in common use worldwide for large scale desalination projects. Their performance depends on both the maximum brine temperature (top brine temperature or TBT) and the minimum brine temperature (bottom brine temperature or BBT) that can be used in the process. The higher the difference between the TBT and the BBT (the flashing range), the higher the plant productivity becomes. Modem conventional MSF plants operate at a top brine temperature ranging between 105 ° C and 112 ° C; and the brine and distillate temperature in the bottom stage of the heat recovery section varies between 65° and 50° and depends on the seawater cooling flow rate and temperature. An advanced MSF plant employing a combination of MSF and Nanofiltration technology allowing TBT to exceed 120° C (as disclosed in Awerbuch EP 1206414 (WO 0114256)) and this provides an even larger flashing range. The proposed invention relates to a modification to the MSF plant design which allows more brine from the MSF plant to flash in the heat rejection section of the evaporator and be condensed in the larger heat transfer surface made available for the condensation of brine.

As a consequence, the brine bottom temperature is lower.

By virtue of these two effects the proposed process modification allows an increase of the process productivity.

MED technology has been used for relatively small applications and operations at relatively lower temperatures. The design top temperature adopted for MED processes varies between 60°C and 70°C.

In sea water reverse osmosis (SWRO) process recovery, reverse osmosis ratio and energy consumption depend on the feed water temperature. The optimal temperature ranges from 30 °C to 35° C, with a technical limit of 40°C for standard membranes.

In the Middle East during the winter season seawater temperatures range from 18°C to 28°C. in North African areas the winter seawater temperature is even lower reaching 14°C to 12°C and never exceeding 28°C. Membrane recovery ratio is defined as the ratio between the membranes permeate and the feed water flow. The higher the recovery ratio the lower both the membrane capital and operating costs become. There are technical limitations existing today in standard seawater membranes which prevent operation of a reverse osmosis plant at a temperature above 39° C.

However the optimal membrane feed water ranges between 28 °C and 32 °C . At lower temperatures the membrane recovery ratio is low, therefore less permeate can be obtained from the membrane with higher energy consumption.

There is a great need for a process that combines the advantages of MSF with the other two technologies, MED and SWRO in order to improve the operating conditions, efficiency and yield of both; taking advantage of the difference in the operating temperature profile of each type of desalination system. The present invention makes available sensible heat from MSF distillate extracted stream at a sufficiently high temperature to both pre-heat seawater RO feed and/or MED feedwater.

### Summary of the Invention

The present invention is directed to an improved process for desalinating salt water at optimal operating conditions by matching MED, RO or other processes, with MSF.

The present invention provides a desalination process for the production of potable water comprising the steps of;
a) extracting at least one distillate stream from at least one higher temperature stage of an MSF separation process and;
b) supplying said at least one distillate stream to at least one stage of a separation process operating at a lower temperature than said higher temperature so as to maximise the use of sensible heat in said distillate stream by heat transfer in said at least one stage, to lower the external heat input of said at least one stage and of the process overall.

In accordance with the invention, the energy associated with the distillate extracted from the last stages of the MSF heat recovery section is recovered in another power or desalination cycle (e.g. MED or RO) operating at lower temperature.

In particular the extraction of the distillate from the distillate trough in the last stages of the heat recovery section of the MSF brings about an improvement in the MSF overall performance as the heat reject section transfer surface is less burdened by distillate and may handle a large volume of flashing brine.

Preferably, said at least one stage is a stage in which feedwater to the MSF separation process is preheated by the said at least one stream.

Desirably said at least one stage is a stage of a second separation process.

Advantageously the second separation process is MED operating at lower temperature, which is, at least in part, thermally driven by heat extracted from said at least one distillate stream derived from MSF. Said at least one distillate stream may be flashed in a series of flash evaporation processes to provide heat by direct transfer from the brine to the MED process.

Where said second separation process is MED, said at least one distillate stream may be flashed to cool the distillate, and the fluid vapour is thermocompressed by ejectors to a high temperature and then input to a higher effect of the MED process.

Also where said second separation process is MED, said at least one distillate stream may be subjected to a series of heat exchange steps in which heat is transferred from the distillate stream to the distillate of the MED.

As an alternative, the second separation process may be a reverse osmosis (RO) process in which the distillate stream from the MSF is used to preheat the seawater feed to the RO process.

At the same time the heat extracted from the MSF in the form of distillate can be utilized as an energy source for a lower temperature process such as the MED.

Particularly the distillate can be either used in a liquid form to feed the MED or it can be flashed and recompressed and input to the MED first stage.

The application of this invention to hybrid MSF/RO processes foresees the use of the extracted distillate to heat the seawater feed to the RO plant for example in winter season in order to obtain a higher recovery ratio from the RO membrane.

As a direct result, a number of advantages are realized which include both a more cost-efficient operation of MSF desalination and a reduction in the energy consumption of the MED or RO plants using the energy stream cascaded from the MSF.

It should be noted that the invention makes available energy from the MSF plant with a contemporary improvement of the MSF plant performances.

The distillate extraction system from the MSF involves other advantages especially in the apparatus/plant, in fact because the distillate trough in the heat rejection section can be substantially smaller, and/or a larger space can be made available to a demister. This space is particularly precious in the heat reject section which is operating under high vacuum, handles large volumes of vapour and this therefore results in high vapour velocities in the demisters.

These in turn are responsible for both loss of efficiency and high conductivity when flooding conditions occur. In this respect, if the larger demister space made available by the reduction of the distillate trough is considered, a further improvement in MSF plant performances can be achieved. The removal of distillate from multistage flash (MSF) stages provides the means to increase production of the desalination plants. The energy contained in the distillate, depending on the stage of removal of distillate, can be recovered by flashing to one or more appropriate multi-effect distillation process (MED) effect-cycle - or preheating the feed to another desalination process such as RO.

In the case of distillate removal from last stage of recovery section before the reject section, the heat flashed in the last stages is not at all beneficial, necessary or required for the MSF distillation process, but could be used to preheat feed to membrane processes, as proposed.

In general, heat of reflashing distillate is condensing on heat transfer surfaces (HTS) and requires a tube area for condensation which could be used for condensing additional new vapour produced from flashing brine. The additional area, not occupied by a distillate collector channel, can be used to increase the area of demisters, particularly in lower stages of MSF.

The heat removed from MSF stages by taking distillate from MSF can be reflashed to lower temperature of MED effects, both to provide sensible heat to preheat feed in direct contact, or through feedwater heaters of MED.

The result of removal of distillate from all or some strategically located stages of MSF plant will provide additional output of distilled water of existing and future MSF plants. The heat contained and the thermal potential of the distillate is recovered by hybridization with MED, VC or RO processes. This allows maximisation of production, both in MSF, as well as increasing efficiency of other desalination processes. The preferred process is to remove distillate every few stages and transfer the available heat by flashing in MED flash tanks which provide vapour to preheat the feed in direct contact with spray sub-cooled feed, or provide steam-vapour to feedwater heater.

### Brief Description of the Drawings

Fig. 1 is a schematic flow diagram of an integrated hybrid MSF - MED desalination process using a distillate stream from the high temperature stage of a MSF distillation as a direct feed to an MED process.
Fig. 2 is a schematic flow diagram illustrating a second, hybrid MSF - MED desalination process in which the distillate is flashed and the vapour fed to MED process.
Fig. 3 is a schematic flow diagram illustrating a third, fully integrated, MSF - MED desalination process using distillate from the MSF process and recycling brine and noncondensable gases to enhance the MED performance.
Fig. 4 is a schematic flow diagram illustrating a fourth, hybrid MSF - RO desalination process using distillate from the MSF plant to preheat the feed water to RO process.
Fig. 5 is a graph showing the percentage increase in distillate production against the distillate extraction.

### Description of the Preferred Embodiments

The prior art MSF desalination processes are significantly improved by the present invention. Having read and understood the features and principles of the invention as presently described and shown in the figures, an experienced engineer in designing, manufacturing and operating water desalination systems of the type contemplated by this invention would be able to practice the invention and realize its benefits.

According to one aspect of the invention, the improvement resides with the discovery that the extraction of the MSF distillate can be used to provide energy to another process cycle operating at a lower temperature. It has been discovered furthermore that the extraction brings about substantial improvements in the performance of MSF desalination plant from which the distillate is extracted These improvements are not suggested by the prior art.

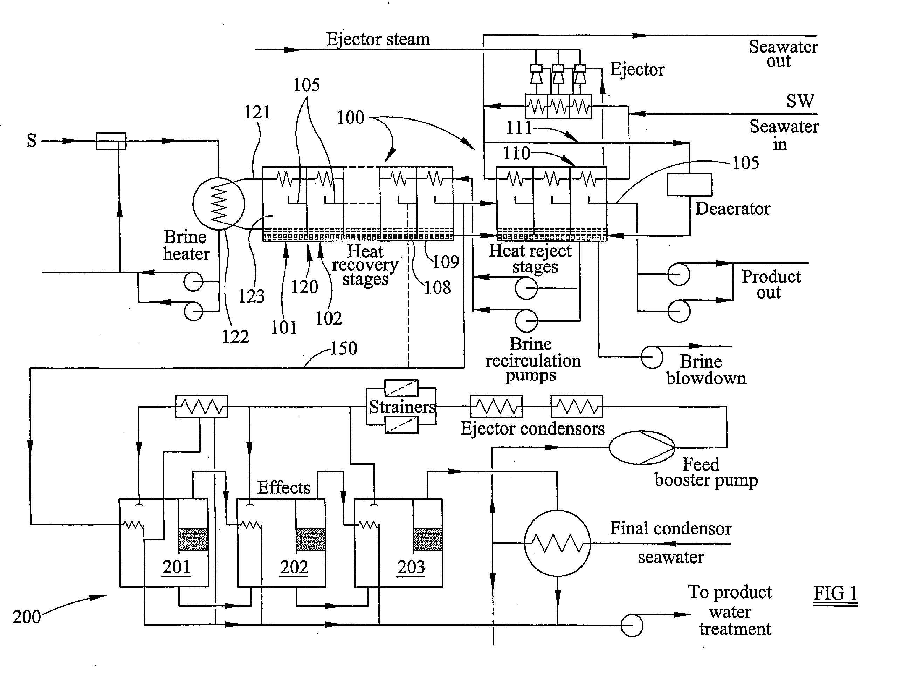

In each of the embodiments of Figures 1 to 4 there is provided a MSF shown generally as 100 which comprises heat reject stages 110 and heat recovery stages 120.

The principles of MSF distillation are simple. Sea water feed (SW) is pressurized and heated to the maximum plant temperature. When the heated liquid is discharged into a chamber 123 maintained slightly below the saturation vapour pressure of the liquid, a fraction of its water content flashes into steam. The flash steam is then stripped of suspended brine droplets as it passes through a mist eliminator and condenses on the exterior surface of heat transfer tubing. The condensed liquid drips into trays (105) as hot product water.

The unflashed brine enters a second chamber, or stage, where it flashes to steam at a lower temperature, thereby producing an additional quantity of product water. Simultaneously, the distillate from the first stage (101) passes to the distillate tray in the second stage and gives up some of its heat. The flash-cooling process is repeated from stage to stage until both the cooled brine and the cooled distillate are finally discharged from the plant as blowdown brine and product water, respectively.

The recirculating brine (121) stream flowing through the interior of the tubes that condenses the vapour in each stage serves to remove the latent heat of condensation. In so doing, the recirculating brine is pre-heated, simultaneously recovering the energy of the condensing vapour. This portion of the multistage flash distillation plant is called the "heat recovery" section. The pre-heated brine is finally brought up to the maximum operating temperature in a brine heater (122) supplied with steam from an external source (S). The cool end of the plant, called the "heat rejection" section has the task to both remove the waste heat by external cooling seawater and produce distillate by condensing part of the remaining part-flashing brine from the heat recovery section. A fraction (111) of this cooling stream, branched downstream of the heat reject section, is pre-heated and becomes make-up water.

Specifically, with the present invention, by extracting a stream 150 of distillate in the last heat recovery stages 109 (and optionally 108 in broken line) of the MSF evaporator, MSF production increases without any substantial decrease in the performance ratio and therefore without any increased external steam requirement.

Furthermore, in apparatus for the process of new construction a larger space can be made available for demisters therefore allowing a further improvement in plant performance.

The energy of the distillate stream is used as an energy source for a distinct MED separator shown generally as 200 comprising a series of effects 201, 202, 203,

The use of distillate as a heat source for an MED process allows the MED to operate with very low supplied (external) heat consumption and increases the energy efficiency of the system.

It should be noted that in addition to the performance improvement, the invention grants some environmental benefits. As indicated in table 1 below, with the same seawater flow rate through the heat reject section both the bottom brine temperature (BBT) and the heat reject outlet temperature is lower. Alternatively the cooling water flow rate through the heat reject section can be reduced, or a combination of the two may be achieved. Both aspects bring about an improvement of the environmental impact.

Table 1 summarizes the advantages achieved by the present invention in the both the options of retrofitting the concept in an existing site or introducing it as a design feature for a new plant.

**Table 1 : summary of invention benefits**

| **EXISTING PLANT (retrofit)** | **NEW PLANT** |
|---|---|
| Increase in MSF Distillate output without decrease in performance ratio. | Increase in MSF Distillate output and increase in plant performance ratio. |
| Extraction of a thermal stream usable in another process | Extraction of a thermal stream usable in another process |
| . Modification of the internal distiller layout with possibility to increase demister/release areas and decrease distillate tray. | Optimization in internal distiller layout with possibility to increase demister/release areas and decrease distillate tray. |
| Decrease in demisters velocity and increase in distillate purity. Protections of purity of the main distillate stream by removal before reject section. Reduction of parasitic losses | Decrease in demisters velocity and increase in distillate purity.. Protection of purity of the main distillate stream by removal before reject section |
| Reduction of brine bottom temperature | Reduction of brine bottom temperature |
| Possibility to reduce sea water consumption | Possibility to reduce seawater consumption |

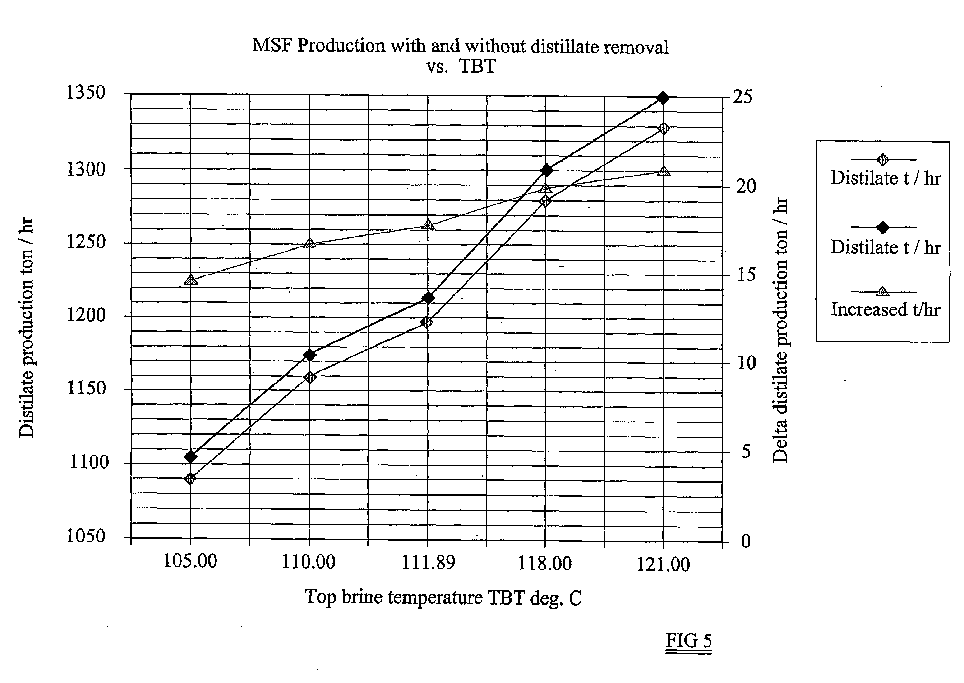

If the invention is retrofitted in an existing MSF plant there are unavoidable constraints given by the existing design which may prevent the increase of the demisters area. In this case as indicated in table 1 the plant output will increase. The plant percentage increase is indicated in Figure 5 and Table 2. If the invention is applied to a new MSF plant the same may imply a redesign of the evaporator internal arrangement in the last stage of the heat reject section which makes available more space to demisters and therefore allows an increase in the performance ratio.

Table 2 shows a comparative analysis of a 5 MIGD (million Imperial gallon per day) 17 stages MSF plant operating under the same conditions of top brine temperature, seawater temperature and brine recirculation flow rate with the extraction of the distillate flow (in accordance with the invention) from the 14^{th} stage.

**TABLE 2**

| MSF PERFORMANCE WITH AND WITHOUT DISTILLATE EXTRACTION | | |
|---|---|---|
| PARAMETER | WITH DISTILLATE EXTRACTION | WITHOUT DISTILLATE EXTRACTION |
| TOP BRINE TEMPERATURE | 110°C | 110°C |
| BOTTOM BRINE TEMPERATURE | 41.3 °C | 42.4 °C |
| DISTILLATE FLOW | 1157.95 Tons/hr | 1174.7 Tons/hr |
| PERFORMANCE RATIO | 7.46 (t/t) | 7.45 (t/t) |
| STEAM DEMAND | 155.27 (Tons/hr) | 157.74 (Tons/hr) |
| ENERGY MADE AVAILABLE TO DOWNSTREAM CYCLE | 61384 kJ/s | 0 |

The desalination apparatus conceived includes distillate removal from MSF to be flashed in a tank to cool the distillate and the vapour flashed are thermo- compressed through ejectors to higher temperature entering higher stage of MSF

One of the benefits of the invented apparatus includes distillate removal from MSF to be flashed in a flashing tank to cool the distillate, and distillates and the flashed vapour are condensed in a process operating at lower temperature to obtained a double distilled product of extremely high purity below .01 ppm TDS.

Figure 1 illustrates a basic flow diagram of an MSF - MED integrated system with an MED first effect heated up by distillate extracted from the MSF instead of condensing steam.

The MED plant is in all aspects similar to a conventional MED plant with the difference that the first effect is fed by distillate from the MSF instead of steam. The distillate is cooled in the first effect by transfer of heat to fresh seawater in the MED effect.

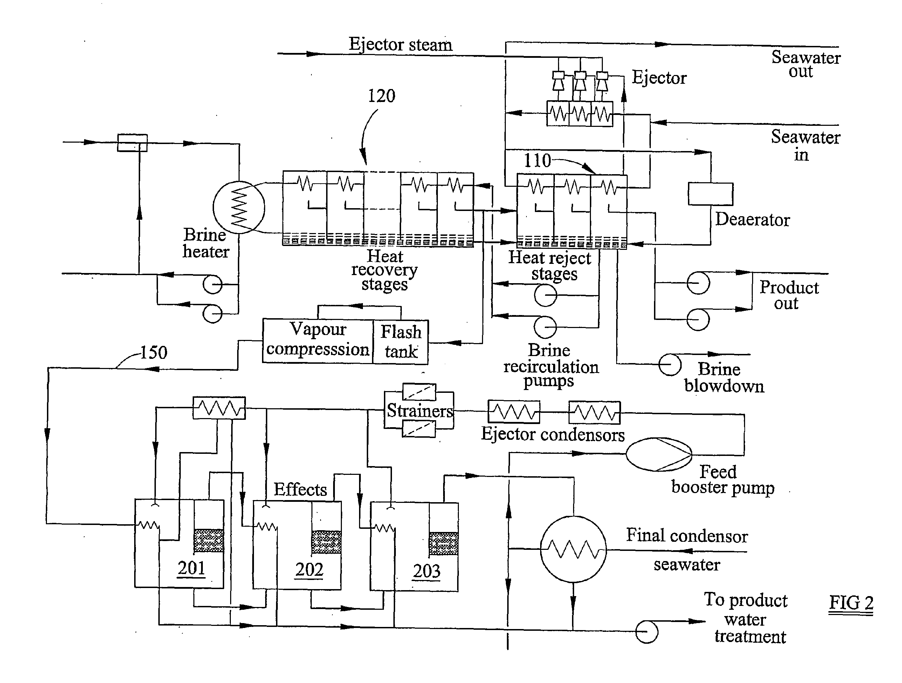

An alternative pattern is indicated in Figure 2 where MSF distillate is conveyed to a flashing tank and the vapour generated by distillate flashing is thermo compressed to the evaporator first stage.

The desalination apparatus conceived includes the heat transfer in a series of flashing tanks providing flashed vapour by direct contact from the distillate to the MED. The desalination apparatus according to the invention provides for the distillate removed from MSF to a flashing tank to cool the distillate and the flashed vapour are thermo- compressed by ejectors to a higher temperature before entering a higher effect of MED

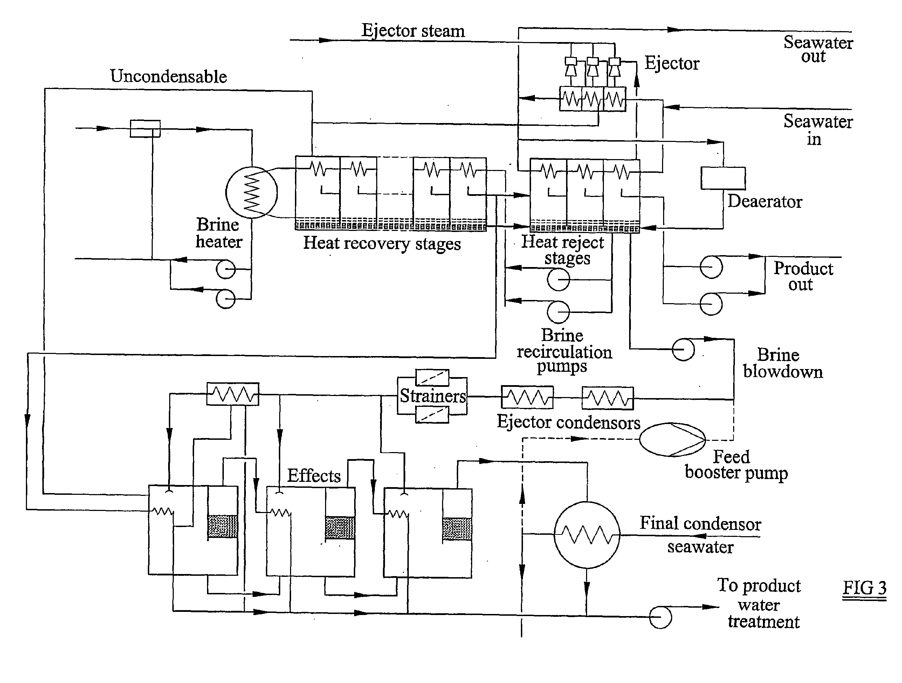

An alternative desalination apparatus according to the invention provides for the heat transfer to be conducted in a series of heat exchangers between the MSF distillate and the distillate of MED
(a) A full integrated MED - MSF option is shown in Figure 3. According to one embodiment of the present invention three streams are extracted from MSF and conveyed to MED: distillate, un-condensable vent from first stage, brine blow down. Brine is used as feed water to the MED, and hot distillate is used instead of steam. The inventive step includes extraction of MSF brine streams to a MED process by routing the brine extraction to a second process operating at lower temperature in order to utilize the sensible heat of the brine stream, In this case the invented desalination apparatus comprise of an apparatus for the heat transfer is a series of flashing tanks providing flashed vapour by direct contact from the brine to the MED. An alternative desalination apparatus according to the invention includes brine removed from MSF is flashed in a flashing tank to cool the distillate and the vapour flashed a re thermo- compressed by ejectors to higher temperature entering higher effect of MED Another alternative of the inventive apparatus provides for the heat transfer in a serious of heat exchangers between the brine of MSF and the feed of MED.

At the operating temperature of the MED plant the risk of precipitation of Magnesium hydroxide would be prevented from the injection in the stage of CO₂ from the MSF with the advantage that the MED plant will always be in cleaner conditions.

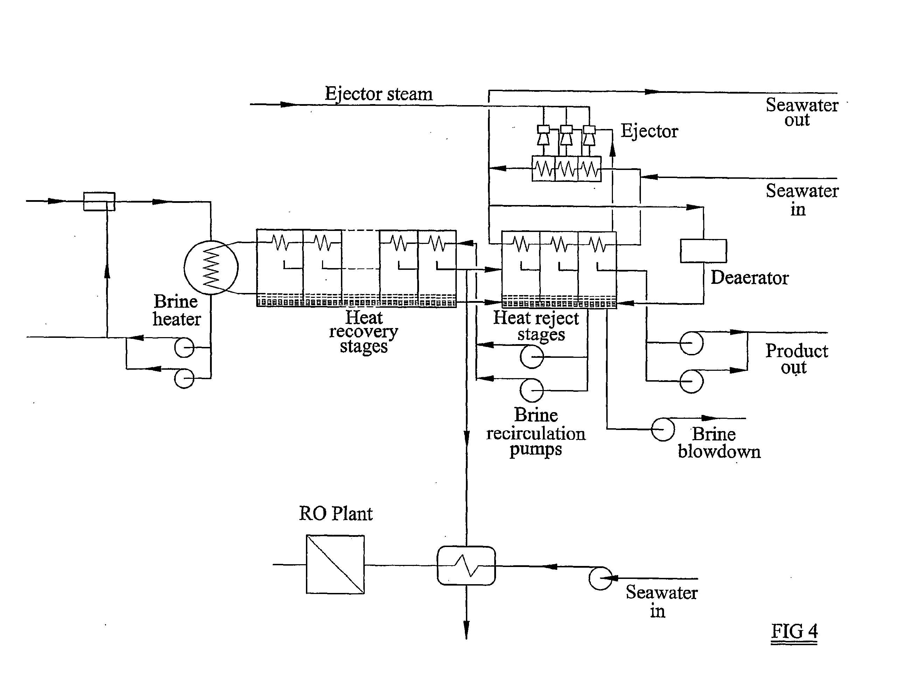

The operating configuration of Figure 4 illustrates a hybrid MSF/RO plant with RO feed water heated up by MSF distillate extracted as previously indicated.

According to one embodiment of the invention, the membrane feed water is heated up to 28- 30 degrees by the sensible heat of the distillate with the benefit of maintaining a higher permeate recovery ratio a lower specific power consumption and a more constant working temperature to the membrane inlet which is reflected in a longer membrane life.

The desalination apparatus according to this invention provides for the apparatus for the heat transfer is a series of flashing tanks providing flashed vapour by direct contact from the distillate to the RO feed. Alternative embodiment of this invention provides for distillate removal from MSF to be flashed in a flashing tank to cool the distillate and the vapour flashed are thermo- compressed by ejectors to higher temperature to heat the RO feed. Another alternative provides for desalination apparatus for the heat transfer to be heat exchangers between the MSF distillate and the RO feed.

The graph shown in Figure 5 is based on a nominal 5 million imperial gallons per day (MIGD) throughput. With throughputs at present exceeding 15 MIGD the increase in output would be proportionally increased.

## Claims

1. A desalination process for the production of potable water comprising the steps of;
a) extracting at least one distillate stream (150) from at least one higher temperature stage (109) of an MSF separation process (100) and;
b) supplying said at least one distillate stream to at least one stage (201) of a separation process (200) operating at a lower temperature than said higher temperature so as to maximise the use of sensible heat in said distillate stream by heat transfer in said at least one stage, to lower the external heat input of said at least one stage and of the process overall.

2. A desalination process as claimed in claim 1 in which said at least one stage is a stage in which feedwater to the MSF separation process is preheated by the said at least one stream.

3. A desalination process as claimed in claim 1 or claim 2 in which said at least one stage (201) is a stage of a second separation process (200).

4. The desalination process as claimed in claim 3 in which the second separation process is MED (200) operating at lower temperature, which is, at least in part, thermally driven by heat extracted from said at least one distillate stream derived from MSF.

5. A desalination process as claimed in claim 4 in which said at least one distillate stream is flashed in a series of flash evaporation processes (Fig 2) to provide heat by direct transfer from the brine to the MED process.

6. A desalination process as claimed in claim 4 or claim 5 in which said at least one distillate stream is flashed to cool the distillate, and the fluid vapour is thermocompressed by ejectors (Fig 2) to a high temperature and then input to a higher effect of the MED process.

7. A desalination process as claimed in claim 4 or claim 5 in which said at least one distillate stream is subjected to a series of heat exchange steps in which heat is transferred from the distillate stream to the distillate of the MED.

8. A desalination process as claimed in claim 3 in which the second separation process is a reverse osmosis (RO) process in which the distillate stream from the MSF is used to preheat the seawater feed to the RO process.

9. A desalination process as claimed in any preceding claim in which the heat extracted from the MSF in the form of distillate is utilized as an energy source for a lower temperature process such as the MED.

10. A desalination process as claimed in claim 9 in which the distillate is used in a liquid form to feed the MED.

11. A desalination process as claimed in claim 9 in which the distillate is flashed and recompressed and input to the MED first stage.

## Patentansprüche

1. Entsalzungsverfahren für die Herstellung von Trinkwasser, mit den folgenden Schritten:
a) Gewinnen mindestens eines Destillatstroms (150) aus mindestens einer Stufe höherer Temperatur (109) eines MSF- (mehrstufigen Entspannungsverdampfungs-)Trennverfahrens (100) und;
b) Zufuhr des mindestens einen Destillatstroms zu mindestens einer Stufe (201) eines Trennverfahrens (200), das mit einer niedrigeren Temperatur als der höheren Temperatur arbeitet, um den Eigenwärmeeinsatz in dem Destillatstrom durch Wärmeübertragung in der mindestens einen Stufe zu maximieren und den externen Wärmeeintrag der mindestens einen Stufe und des Verfahrens insgesamt zu vermindern.

2. Entsalzungsverfahren nach Anspruch 1, wobei die mindestens eine Stufe eine Stufe ist, in der Speisewasser des MSF-Trennverfahrens durch den mindestens einen Strom vorgewärmt wird.

3. Entsalzungsverfahren nach Anspruch 1 oder Anspruch 2, wobei die mindestens eine Stufe (201) eine Stufe eines zweiten Trennverfahrens (200) ist.

4. Entsalzungsverfahren nach Anspruch 3, wobei das zweite Trennverfahren die bei niedrigerer Temperatur arbeitende Multieffektdestillation (MED) (200) ist, die zumindest teilweise thermisch durch Wärme betrieben wird, die dem aus der Entspannungsverdampfung (MSF) abgeleiteten mindestens einen Destillatstrom entnommen wird.

5. Entsalzungsverfahren nach Anspruch 4, wobei der mindestens eine Destillatstrom in einer Reihe von Entspannungsverdampfungsprozessen (Fig. 2) entspannt wird, um Wärme durch direkte Übertragung aus der Salzlösung zum MED-Prozeß bereitzustellen.

6. Entsalzungsverfahren nach Anspruch 4 oder Anspruch 5, wobei der mindestens eine Destillatstrom entspannt wird, um das Destillat abzukühlen, und der Flüssigkeitsdampf durch Saugstrahlpumpen (Fig. 2) auf eine hohe Temperatur thermokomprimiert und dann zugeführt wird, um eine höhere Wirkung des MED-Prozesses zu erzielen.

7. Entsalzungsverfahren nach Anspruch 4 oder Anspruch 5, wobei der mindestens eine Destillatstrom einer Reihe von Wärmeaustauschschritten ausgesetzt wird, in denen Wärme von dem Destillatstrom zu dem Destillat der Multieffektdestillation (MED) übertragen wird.

8. Entsalzungsverfahren nach Anspruch 3, wobei das zweite Trennverfahren ein Umkehrosmoseprozeß (RO-Prozeß) ist, in dem der Destillatstrom von der Entspannungsverdampfung (MSF) zum Vorwärmen des Meerwasserzulaufs zu dem RO-Prozeß genutzt wird.

9. Entsalzungsverfahren nach einem der vorstehenden Ansprüche, wobei die aus der Entspannungsverdampfung (MSF) in Form von Destillat entnommene Wärme als Energiequelle für ein bei niedrigerer Temperatur arbeitendes Verfahren genutzt wird, wie z. B. die Multieffektdestillation (MED).

10. Entsalzungsverfahren nach Anspruch 9, wobei das Destillat in flüssiger Form zur Einspeisung in die Multieffektdestillation (MED) genutzt wird.

11. Entsalzungsverfahren nach Anspruch 9, wobei das Destillat entspannt und wieder komprimiert und in die erste MED-Stufe eingetragen wird.

## Revendications

1. Procédé de dessalage pour la production d'eau potable comprenant les étapes:
a) d'extraction d'au moins un courant de distillat (150) provenant d'au moins une phase à température supérieure (109) d'un procédé de séparation MSF (distillation à détentes étagées) (100); et
b) d'approvisionnement dudit au moins un courant de distillat vers au moins une phase (201) d'un procédé de séparation (200) fonctionnant à une température inférieure à ladite température supérieure de manière à maximiser l'utilisation de chaleur sensible dans ledit courant de distillat par un transfert de chaleur dans ladite au moins une phase, pour abaisser l'apport de chaleur externe de ladite au moins une phase et du procédé globalement.

2. Procédé de dessalage suivant la revendication 1, dans lequel ladite au moins une phase est une phase dans laquelle l'eau d'alimentation du procédé de séparation MSF est préchauffée par ledit au moins un courant.

3. Procédé de dessalage suivant la revendication 1 ou la revendication 2, dans lequel ladite au moins une phase (201) est une phase d'un deuxième procédé de séparation (200).

4. Procédé de dessalage suivant la revendication 3, dans lequel le deuxième procédé de séparation est un procédé MED (distillation à multiples effets) (200) fonctionnant à une température inférieure, qui est, au moins en partie, thermiquement conduit par la chaleur extraite dudit au moins un courant de distillat dérivé du procédé MSF.

5. Procédé de dessalage suivant la revendication 4, dans lequel ledit au moins un courant de distillat est évaporé rapidement dans une série de procédés d'évaporation éclair (Fig. 2) pour donner de la chaleur par un transfert direct de la saumure au procédé MED.

6. Procédé de dessalage suivant la revendication 4 ou la revendication 5, dans lequel ledit au moins un courant de distillat est évaporé rapidement pour refroidir le distillat et la vapeur de fluide est comprimée thermiquement par des éjecteurs (Fig. 2) à une température élevée et ensuite apportée en vue d'un effet supérieur du procédé MED.

7. Procédé de dessalage suivant la revendication 4 ou la revendication 5, dans lequel ledit au moins un courant de distillat est soumis à une série d'étapes d'échange de chaleur dans lesquelles la chaleur est transférée du courant de distillat au distillat du procédé MED.

8. Procédé de dessalage suivant la revendication 3, dans lequel le deuxième procédé de séparation est un procédé d'osmose inverse (RO) dans lequel le courant de distillat provenant du procédé MSF est utilisé pour préchauffer l'alimentation d'eau de mer vers le procédé RO.

9. Procédé de dessalage suivant l'une quelconque des revendications précédentes, dans lequel la chaleur extraite du procédé MSF sous la forme d'un distillat est utilisée comme source d'énergie pour un procédé à température inférieure tel que le procédé MED.

10. Procédé de dessalage suivant la revendication 9, dans lequel le distillat est utilisé sous une forme liquide pour alimenter le procédé MED.

11. Procédé de dessalage suivant la revendication 9, dans lequel le distillat est évaporé rapidement et comprimé à nouveau et apporté à la première phase du procédé MED.
